# EUROPÄISCHE PATENTSCHRIFT

(11) **EP 3 172 122 B1**
(45) Veröffentlichungstag und Bekanntmachung des Hinweises auf die Patenterteilung: **26.09.2018**
(21) Anmeldenummer: 15741202.4
(22) Anmeldetag: 23.07.2015
(51) Int. Cl.: B62M 6/55

(54) **ELEKTRISCHER FAHRRAD-HILFSANTRIEB**
ELECTRIC AUXILIARY BICYCLE DRIVE
ENTRAÎNEMENT ÉLECTRIQUE AUXILIAIRE D'UNE BICYCLETTE

(30) Priorität: 24.07.2014 DE 102014110427
(43) Veröffentlichungstag der Anmeldung: 31.05.2017
(73) Patentinhaber: Pendix GmbH, 08056 Zwickau (DE)
(72) Erfinder: FETHKE, Sebastian, 08058 Zwickau (DE)
(74) Vertreter: Bauer, Steffen
(86) Internationale Anmeldenummer: PCT/EP2015/066893
(87) Internationale Veröffentlichungsnummer: WO 2016/012547

(56) Entgegenhaltungen:
- DE-A1-102010 026 404
- DE-U1-202014 101 640

## Beschreibung

Die Erfindung betrifft einen elektrischen Fahrrad-Hilfsantrieb. Das Anwendungsgebiet der Erfindung sind Fahrräder, die über einen Hilfsantrieb verfügen, der in Abhängigkeit von einem geeigneten Parameter, beispielsweise der auf die Kraftübertragung ausgeübten Kurbelleistung die Muskelkraft unterstützend oder tretunabhängig wirkt.

Derartige Hilfsantriebe sind in verschiedener Anbauweise bekannt. Radnabenmotoren bieten den Vorteil, dass eine Rekuperation, d. h. eine Energierückspeisung beispielsweise bei Bergabfahrt erfolgen kann. Tretlagermotoren haben den Vorteil, dass sie direkt auf den Kurbelantrieb wirken und damit über die am Fahrrad ohnehin vorhandene Schaltung in einem größeren Drehmomentbereich wirksam werden können. Tretlagermotoren haben weiterhin den Vorteil, dass ein herkömmliches Fahrrad einfacher mit einem solchen als mit einem Radnabenmotor nachgerüstet werden kann, denn bei der Verwendung eines Radnabenmotors muss jeweils zumindest ein Rad an einem herkömmlichen Fahrrad komplett ersetzt werden und Kabel zur Motorsteuerung und Stromversorgung des Motors müssen verlegt werden. Außerdem erweist sich die Kabelführung zum Akkumulator und der Steuer- und Bedieneinrichtung als relativ aufwändig. Ein bekannter am Tretlager angeordneter elektrischer Hilfsantriebsmotor für ein Fahrrad ist in der DE 10 2010 026 404 A1 beschrieben, der nachrüstbar ist und ohne größere Umbauarbeiten an jedem herkömmlichen Fahrrad verwendet werden kann. Der bekannte nachrüstbare Hilfsantriebsmotor soll dabei besonders robust und wartungsarm sowie einfach und damit preiswert herstellbar sein. Der bekannte Hilfsantriebsmotor für ein Fahrrad umfasst einen Stator und einen Rotor, welche beide in einem gemeinsamen Gehäuse angeordnet sind. Der Stator ist mittels des Gehäuses mit einem herkömmlichen Fahrradrahmen verbindbar. Der Rotor ist durch Permanentmagneten gebildet und erfindungsgemäß mit einem rotierbaren Teil eines Tretlagers verbindbar. Die Permanentmagneten sind auf einem im Gehäuse rotierbar gelagerten Rotorblech montiert, welches gleichzeitig einen magnetischen Rückschluss über das Gehäuse bildet. Das Rotorblech bildet gemeinsam mit dem Gehäuse eine in sich abgeschlossene Hilfsantriebsmotoreinheit. Das Gehäuse des Hilfsantriebsmotors kann über eine Klemmung oder Verschraubung am Fahrradrahmen befestigt werden. Dabei sollte selbstverständlich in bekannter Weise eine Drehmomentstütze realisiert werden. Der Rotor kann mit einer Tretlagerwelle als rotierendes Teil des Tretlagers verbunden werden. Dazu könnte der Hilfsantriebsmotor an der dem Kettenblatt gegenüber liegenden Seite des Fahrradrahmens angeordnet werden und in geeigneter Weise eine Verbindung zur Tretlagerwelle geschaffen werden. Gehäuse bzw. Rotorblech müssen dazu entsprechend angepasst werden. Der bekannte Hilfsantriebsmotor umfasst weiterhin einen Sensor zur Erfassung des auf die Tretkurbel einwirkenden Drehmomentes und eine in das Gehäuse integrierte Steuer- bzw. Regeleinheit zur Steuerung der Leistungsabgabe des Motors in Abhängigkeit des eingebrachten Drehmomentes. Die Vorteile der bekannten Lösung sind insbesondere darin zu sehen, dass eine Verwendung an jedem herkömmlichen Fahrrad ohne den Austausch eines oder mehrerer Komponenten möglich ist. Weiterhin ist es als vorteilhaft anzusehen, dass durch die Anordnung des Hilfsantriebsmotors am Tretlager des Fahrrades ein besonders guter Wirkungsgrad des Motors in Verbindung mit der am Fahrrad vorhandenen Schaltung erreicht werden kann.

Der Erfindung liegt die Aufgabe zugrunde, derartige elektrische Hilfsantriebe hinsichtlich einfacher Herstellung und Nachrüstbarkeit zu verbessern.

Die Aufgabe wird mit einem Fahrrad-Hilfsantrieb nach Patentanspruch 1 gelöst, der einen in Fahrtrichtung linksseitig angeordneten Elektromotor mit einem Stator, der mit einem Fahrradrahmen verbunden ist, und einem Rotor, der mit einem rotierbaren Teil eines Fahrradtretlagers verbunden ist und einen oder mehrere Permanentmagnete aufweist, und eine Regeleinrichtung zur Einstellung der Leistung des Elektromotors mit einer Regelschaltungsanordnung und einem mit der Regelschaltungsanordnung verbundenen Istwert-Sensor zur Erfassung des auf den rotierbaren Teil des Tretlagers wirkenden Drehmoments umfasst. Der Rotor ist in einem mitdrehenden Gehäuse angeordnet, das mit einer Tretkurbel verbunden und formschlüssig auf einer Tretlagerwelle angeordnet ist. Der Stator ist in einem mit dem Fahrradrahmen verbundenen und gegen Verdrehung gesicherten Gehäuse angeordnet, das gegen das mitdrehende Gehäuse des Rotors einen elastischen Dichtring aufweist. Die Regelschaltungsanordnung ist im Inneren des Statorgehäuses angeordnet. Das Statorgehäuse ist mit dem Fahrradrahmen mittels einer Klauenkupplungverbunden, die mit einem Tretlagergehäuse verschraubt ist und über ein elastisches und spielfreies Zwischenelement verfügt. Die Regeleinrichtung dient zur Einstellung der Motorleistung des Elektromotors, so dass die auf den rotierbaren Teil des Tretlagers wirkende Gesamtleistung aus Motorleistung und auf den herkömmlichen Kurbeltrieb ausgeübter Muskelleistung gesteigert wird.

Vorteilhaft ausgestaltet ist die Erfindung, indem das Rotorgehäuse mittels eines Rillenkugellagers auf dem Statorgehäuse gelagert ist.

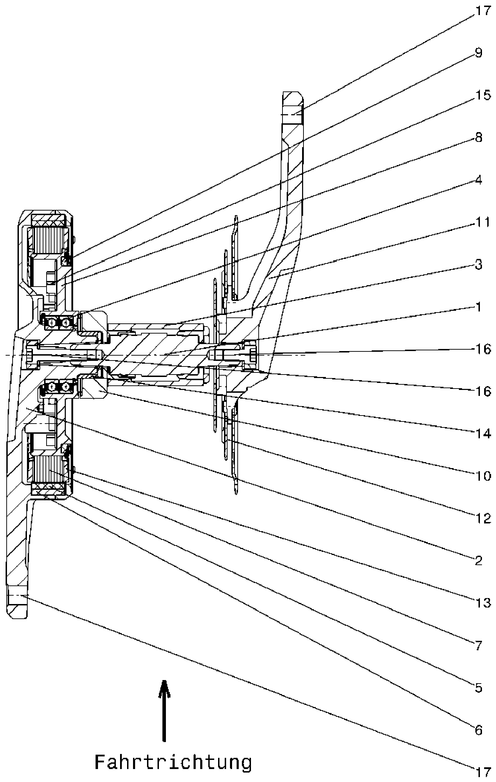

Ein bevorzugtes Ausführungsbeispiel eines erfindungsgemäßen Fahrrrad-Hilfsantriebs wird nachfolgend anhand der Zeichnung näher erläutert. Die Zeichnung zeigt in der einzigen Figur
einen Fahrradantrieb in Schnittdarstellung.

Die dargestellte Ausführungsform eines erfindungsgemäßen elektrischen Fahrrad-Hilfsantriebs umfasst ein in einem Tretlagergehäuse 3, das in bekannter Weise Bestandteil eines Fahrradrahmens ist, angeordnetes Standardtretlager 1. In Fahrtrichtung rechts ist auf dem Tretlagerzapfen, der nicht explizit dargestellt, dem Fachmann in seiner Ausbildung beispielsweise als Vierkant indes geläufig ist, ein Kettenradsatz 12, hier in Triple-Ausführung, mit rechter Tretkurbel 11, die am distalen Ende ein Pedalauge 17 aufweist, formschlüssig angeordnet und mittels einer ersten Zentralverschraubung 16 in bekannter Weise befestigt. In Fahrtrichtung links ist auf dem entsprechenden Tretlagerzapfen ein Rotorgehäuse in Form einer Rotorglocke 2 formschlüssig angeordnet und mittels einer zweiten Zentralverschraubung 16 befestigt. Die Rotorglocke 2 umfasst die linke, am distalen Ende mit einem Pedalauge 17 versehene Tretkurbel, indem Rotorglocke 2 und Tretkurbel als ein Formteil hergestellt sind. Mit dem Tretlagergehäuse 3 ist ein Statorgehäuse 8 verbunden, wobei das Statorgehäuse 8 gegen Verdrehung gesichert ist. Die Verbindung erfolgt mittels einer Klauenkupplung 10, deren statorseitige Klauen in das Statorgehäuse 8 eingeformt sind. Die Klauenkupplung 10 ist in das Tretlagergehäuse 3 eingeschraubt, wofür das linksseitig vorhandene Rechtsgewinde des Tretlagergehäuses 3 genutzt wird. Die Klauenkupplung 10 ersetzt somit den linksseitigen Gewindering des Standardtretlagers 1. Sie verfügt über ein elastisches und spielfreies Zwischenelement 14, das für eine drehelastische, winkel- und längsnachgiebige Verbindung sorgt. Die Klauenkupplung 10 nimmt das Drehmoment des Statorgehäuses 8 auf und macht somit eine anderweitige Drehmomentstütze, etwa in Form einer Sattelrohrklaue entbehrlich. Die Rotorglocke 2 besteht, abgesehen von der angeformten Tretkurbel, aus einem flachen Bodenstück und einem Randbereich. Die Innenfläche des Randbereichs trägt einen Rückschlussring 6 zur Leitung des Magnetflusses von an seiner Innenfläche über den Umfang angeordneter Permanentmagneten 5. Die Permanentmagneten 5 stehen in Wirkkontakt mit Statormagneten, die aus einem ringförmigen, mit dem Statorgehäuse 8 verbundenen Statorblechpaket 7 und darauf angeordneten Statorwicklungen 13 bestehen. Im Inneren des Statorgehäuses 8 ist eine Regelschaltungsanordnung 15 auf einer vorteilhaft ringförmig ausgebildeten Leiterplatte angeordnet. Die Regelschaltung 15 verarbeitet Istwertdaten eines nicht dargestellten, an der Welle des Standardtretlagers 1 angreifenden Drehmoment- und Trittfrequenzsensors und steuert die Leistungsaufnahme der Statorwicklungen 13. Die Rotorglocke 2 umläuft das Statorgehäuse 8 auf einem Rillenkugellager 4. Zur Abdichtung des Motorinnenraums gegen Schmutz und Nässe ist das Statorgehäuse 8 mit einem gegenüber dem Rand der Rotorglocke 2 angeordneten gummielastischen V-Dichtring 9 versehen.

## Patentansprüche

1. Elektrischer Fahrrad-Hilfsantrieb, umfassend einen in Fahrtrichtung linksseitig angeordneten Elektromotor mit einem mit einem Fahrradrahmen (3) verbundenen Stator und einem mit einem rotierbaren Teil eines Fahrradtretlagers (1) verbundenen Rotor, der einen oder mehrere Permanentmagnete (5) aufweist, und eine Regeleinrichtung zur Einstellung der Leistung des Elektromotors mit einer Regelschaltungsanordnung (15) und einem mit der Regelschaltungsanordnung (15) verbundenen Istwert-Sensor zur Erfassung des auf den rotierbaren Teil des Tretlagers (1) wirkenden Drehmoments, wobei der Rotor in einem mitdrehenden Gehäuse (2) angeordnet ist, das mit einer Tretkurbel verbunden und formschlüssig auf einer Tretlagerwelle angeordnet ist, der Stator in einem mit dem Fahrradrahmen (3) verbundenen und gegen Verdrehung gesicherten Gehäuse (8) angeordnet ist, das gegen das mitdrehende Gehäuse (2) des Rotors einen elastischen Dichtring (9) aufweist und die Regelschaltungsanordnung (15) im Inneren des Statorgehäuses (8) angeordnet ist, **dadurch gekennzeichnet, dass** das Statorgehäuse (8) mit dem Fahrradrahmen (3) mittels einer Klauenkupplung (10) verbunden ist, die mit einem Tretlagergehäuse (3) verschraubt ist und über ein elastisches und spielfreies Zwischenelement (14) verfügt.

2. Elektrischer Fahrrad-Hilfsantrieb nach Anspruch 1, **dadurch gekennzeichnet, dass** das Rotorgehäuse (2) mittels eines Rillenkugellagers (4) auf dem Statorgehäuse (8) gelagert ist.

## Claims

1. Electric auxiliary bicycle drive comprising an electric motor which is arranged on the left-hand side in the direction of travel and has a stator which is connected to a bicycle frame (3) and has a rotor which is connected to a rotatable part of a bottom bracket (1) of a bicycle and which has one or more permanent magnets (5), and comprising a control device for adjusting the power of the electric motor with a control circuit arrangement (15) and an actual value sensor, which is connected to the control circuit arrangement (15), for detecting the torque which acts on the rotatable part of the bottom bracket (1), wherein the rotor is arranged in a co-rotating housing (2) which is connected to a pedal crank and which is arranged on a bottom bracket shaft in an interlocking manner, the stator is arranged in a housing (8) which is connected to the bicycle frame (3) and which is secured against rotation and which has an elastic sealing ring (9) in relation to the co-rotating housing (2) of the rotor, and the control circuit arrangement (15) is arranged in the interior of the stator housing (8), **characterized in that** the stator housing (8) is connected to the bicycle frame (3) by means of a claw clutch (10) which is screwed to a bottom bracket housing (3) and has an elastic and play-free intermediate element (14).

2. Electric auxiliary bicycle drive according to Claim 1, **characterized in that** the rotor housing (2) is mounted on the stator housing (8) by means of a deep-groove ball bearing (4).

## Revendications

1. Entraînement électrique auxiliaire d'une bicyclette, comprenant un moteur électrique disposé sur le côté gauche dans le sens de la marche, avec un stator attaché à un cadre de bicyclette (3) et un rotor fixé à une partie tournante d'un pédalier de bicyclette (1), qui présente un ou plusieurs aimant(s) permanent(s) (5), et un dispositif de réglage pour le réglage de la puissance du moteur électrique avec un système de circuit de réglage (15) et un détecteur de valeur instantanée relié au système de circuit de réglage (15) pour la détection du couple agissant sur la partie tournante du pédalier (1), dans lequel le rotor est disposé dans un boîtier (2) entraîné en rotation, qui est relié à une manivelle et est disposé par emboîtement sur un axe de pédalier, le stator est disposé dans un boîtier (8) attaché au cadre de bicyclette (3) et bloqué contre la rotation, qui présente contre le boîtier entraîné en rotation (2) du rotor un anneau d'étanchéité élastique (9) et le système de circuit de réglage (15) est disposé à l'intérieur du boîtier de stator (8), **caractérisé en ce que** le boîtier de stator (8) est attaché au cadre de bicyclette (3) au moyen d'un accouplement à griffes (10), qui est vissé à un boîtier de pédalier (3) et est doté d'un élément intermédiaire élastique et sans jeu (14).

2. Entraînement électrique auxiliaire de bicyclette selon la revendication 1, **caractérisé en ce que** le boîtier de rotor (2) est monté sur le boîtier de stator (8) au moyen d'un roulement à billes rainuré (4).
